Europäisches Patentamt

European Patent Office

Office européen des brevets

(11) Publication number: **0 142 305**
**A2**

## (12) EUROPEAN PATENT APPLICATION

(21) Application number: **84307362.8**

(22) Date of filing: **25.10.84**

(51) Int. Cl.⁴: **G 05 D 23/19**
**G 01 K 17/00, F 24 D 19/10**

(30) Priority: **25.10.83 GB 8328502**

(43) Date of publication of application:
**22.05.85 Bulletin 85/21**

(84) Designated Contracting States:
**AT BE CH DE FR GB IT LI LU NL SE**

(71) Applicant: **MIRROR GROUP NEWSPAPERS LIMITED**
**Holborn Circus**
**London, EC1P 1DQ(GB)**

(72) Inventor: **Carpenter, Ian Keith**
**"Woodstock" Jackson Close**
**Epsom Surrey(GB)**

(74) Representative: **Evans, David Charles et al,**
**F.J. CLEVELAND & COMPANY 40-43, Chancery Lane**
**London, WC2A 1JQ(GB)**

(54) Climatic comparator.

(57) A climatic comparator (10) comprises an external surface (12) for exposure to atmosphere and an internal surface (13) defining a chamber (11), a heater (20) for heating air contained within the chamber (11) and a processor (44) for controlling operation of the heater to maintain constant temperature of air inside the chamber and the proportion of each hour of a twenty four hour period during which the heater is operative to maintain the constant temperature.

EP 0 142 305 A2

FIG.1

- 1 -

<u>TITLE</u>

"CLIMATIC COMPARATOR"

<u>DESCRIPTION</u>

This invention relates to a climatic comparator for use in monitoring and controlling a supply of energy in buildings.

The most common method of managing supply of energy in buildings is to analyse metered supply of energy, such as electricity and gas, to buildings before and after corrective procedures have been carried out thereby to ascertain the effectiveness of implementing such procedures.

A disadvantage of this method is that the metered supply of energy is not a sufficiently accurate measure of conditions for providing adequate information for management of energy consumption. While it is to be expected that a record of metered energy consumption in a building will indicate differences in consumption of energy throughout different seasons of an annual period, the record will not indicate a comparison of energy consumed in a building with the prevailing weather conditions on a

- 2 -

daily basis.

According to the present invention, there is provided a method of comparing climatic conditions at a location during different periods of equal duration comprising the steps of heating air contained in a cavity of a chamber having an external surface exposed to atmosphere, controlling operation of the heater so as to maintain air at a predetermined temperature in compensation for heat lost at the external surface, recording duration of operation of the heater during a predetermined interval and comparing recorded information indicative of duration of operation of the heater for said periods.

In this manner, a record of climatic conditions at the location for different periods can be compared with energy consumed in a building at the location during the corresponding periods so that, if corresponding climatic conditions subsequently prevail at the location during similar periods, energy which will be consumed in the building can be compared and/or predicted during the subsequent periods.

The information may be entered in data-processing apparatus and comparison of the information for the said periods is effected by operation of the apparatus.

Alternatively, recordal of duration of operation of the heater may be effected on a recording medium and comparison of said information may be effected by entering the medium in data-processing apparatus whereby, on operation of the apparatus, information recorded on the medium is compared with information recorded in a store of the apparatus.

Also according to the present invention, there is provided a chamber having an external surface for exposure to atmosphere and an internal surface defining a cavity, a heater for heating air contained in the cavity, means for controlling operation of the heater to supply heat to the gas so as to maintain the gas at a predetermined temperature in compensation for heat lost at the external surface, and means for recording duration of operation of the heater during a predetermined interval so that the recording means provides signals indicative of the proportion of the interval during which the heater is operative which signals are adapted for comparison with signals indicative of other recorded data.

The heater may be electrically operated and the control means may be connected in circuit with the heater and may comprise a thermostat for maintaining the air at said temperature.

The recording means may further include means for storing said signals.

The chamber may be of spherical configuration.

The chamber may be of glass fibre reinforced concrete.

The control means may be adapted to control operation of the heater so that electrical power is supplied to the heater when the temperature of the enclosed air is sustained within the range for example, $43^{O}C$ to $47^{O}C$ in order to represent $45^{O}C$. Failure of the device to sustain a temprature within predetermined limits may result in an error condition which is recorded with the relevant data.

The device of the present invention seeks to provide a statement at specified intervals of climatic conditions relating to a given building or environment.

These conditions can then be measured at a station which may be located indoors or alternatively outdoors.

Wheresoever the chosen location is, the readings obtained will be specific to that site, which if altered or its exposure amended in any way, will consequently affect the date obtained.

The resultant data when taken with previous results will provide a comparison and when the results thus accumulated are found to be equal, this constitutes an indication of "sameness" of climatic conditions during the periods of the measurements.

The data obtained being automatically placed in real time related arrays, permits a wide variety of tests to be made which satisfy for various purposes the test for "sameness".

These qualities of "sameness" however, have to have constituents, which are in terms of physical characteristics related to temperature level, dielectric charge and the consequent vapour content. The dielectric and vapour content together have an effect on energy transfer rate which values cannot be expressed together in any absolute terms. Thus, by determination of the rate of energy dispersal from an enclosed heated source at a controlled level of temperature at a fixed station an expression of "sameness" can be found.

From the equation:-

$$Qh = \frac{t \times POWER}{3,600} = (Ti - To)C$$

in which $Q_h$ = Watts in unit of time (1 hour)

$t$ = Time in seconds power is applied

3,600 = Seconds per hour

Power = Watts for a whole hour

$T_i$ = Sustained internal temperature at a controlling device

$T_o$ = Temperature of external free air shaded $^\circ C$

$C$ = Coefficient of Watts per degree C and where the reference chamber is a geometrically regular enclosure in the form a sphere, all of the attendant factors which together regulate the rate of heat loss, can be seen to influence the value of 't' seconds and the relationship with the value of 'To' at that time are known values. Having consideration to the maximum value of 't' seconds which empirically is observed for a known value of 'To' so the value of 'C' can be determined as a datum worst case. If a range of temperatures for 'To' with Ti constant are similarly observed, the acceptable range over which the value of 'C' is numerically constant can be found. In many cases the value of 'C' is varied and is then found to express 't' seconds with To in values which

- 7 -

lessen the numerical value of 'C' as a percentage.

This second factor is calculated by the expression

$\dfrac{\text{Actual C}}{\text{Theoretical C}}$ and can be obtained continuously from

the data. Thus both ideal calibration can be assured and actual results used for comparison. This can be used to determine "sameness" for specific hours (searching) or for whole days when average dry bulb temperature, power consumption and other values can be observed. These other values can be easily obtained from a manipulation of the stored hourly arrays to give the times of maximum and minimum temperature, power consumption, or more simply the length of trace for 24 hours of the values of both temperature and/or power consumption. "Sameness" can also depend upon the thermal previous hourly history, hence the rolling average over the two previous days for up to 72 hours is of value.

Codification of these qualities of "sameness" when used for the title of the 24 hour array address in computer memory enables the file so formed to be sorted into a variety of statements about "sameness" using alphabetical structure for numerical values.

With the introduction of each new code "word" so its place in the "sameness listing" can be established.

With the extension of the data for each day to include gas, oil, electrical consumption metered readings in these same files, the characteristics of use are made known and their separate and combined values can be examined and compared for days which are known to have similar thermal characteristics over whole years or much longer. Only "same days" should qualify as being equal, proportionality in other respects is not proven by this technique alone.

Proportionality between 't' seconds and 'To" are known not to exist at any time.

The miscibility of a vapour-laden air with various materials is demonstrated by wetting and drying rates and the natural level of moisture content a porous material has at stated temperatures and humidities. No clear statement of this as a rate of change or of steady state condition is possible if the dielectric characteristic of the air is unstable, and the "ground" earthing of the material sample is not qualified.

Those materials having an affinity with hydrogen such as Silica gel demonstrate that hydrolisis of air has an effect on electrolitic value.

The impact that solar cosmic radiation has on the ion count for particulate matter in air at ground level is extreme.

This has the effect of diurnal disturbance which effectively adjusts the relationship of 't' seconds with 'To' $^{\circ}C$. This hidden cyclic effect can counter totally the magnitude of change in 'To' and percentage R.H.

It is, therefore, essential that any device used to identify "sameness" must respond to this dielectrical effect, and this can be done by employing the phoretic effect of the changed particles in a porous domain which is homogeneously constructed.

This can then be demonstrated in this case by the change in thermal restivity of the enclosing envelope and the material is chosen specifically for this purpose to modify the value of constant 'C'.

The choice of such materials is wide, but should be powerful, and structurally practical for continued exposure. The catalysing agent used in concrete is suitable in that it remains active having the quality of attracting a high level of hydrolysis in a porous structure. The cellular properties of glass-reinforced sand and cement enables the percentage by weight of the device to vary by as much as 10-12% in this way.

The sustained temperature inside similarly holds a steady reference in respect to thermal phoretic influences.

This also ensures that a good translation into time is achieved; for rate of heat loss related to power consumption simplifies the control problem of accurate temperature regulation. The use of alumina has been established in water treatment by ion exchange for a long time, and for furnace heating in the form of a fuel additive to improve combustion efficiency.

Tests have shown that device in accordance with the present invention are capable of registering the changes in solar exposure, wind velocity, ionisation, cloud cover, temperature, humidity, vapour pressure and barometric pressure, all of which factors cannot be related mathematically or by statistical rule in absolute terms.

By using the continuous statement of the numerical value of temperature modified by the actual value of the 't' seconds relationship with the theoretical worst value for maximum power, a form of compensation can be used to attenuate the amount of energy required for heating and cooling where this is employed for climate modification.

This form of control is not prescriptive and is derivative, overcoming the use of temperature referencing along. Used in this way, "overshoot" can be selectively attenuated out of the control scheme.

A continuous plot of 't' relative to 'To' also shows climatically the variation in performance that occurs with the movement of frontal weather systems.

Seasonal changes can be demonstrated to relate very closely to the progation of plants and growth generally.

The natural phenomena of solar flares and electrical storms are seen, as was the effect of the solar eclipse on the 29th and 30th of May 1984.

The performance of manufacturing materials whilst in stock and at the point of production also responds to the phoretic influences seen in climate study although housed in controlled conditions. In practical terms it would be possible to detect this and cause the instrument to trigger corrective measures. The printing, flour making, tobacco, rayon spinning, carpet making and similar industries could benefit from this type of device.

- 12 -

Following is a description, by way of example only and with reference to the accompanying drawings, of one method of carrying the invention into effect.

IN THE DRAWINGS :-

FIGURE 1 is a diagrammatic perspective view of one embodiment of a climatic comparator in accordance with the present invention.

FIGURE 2 is a diagram of an electric circuit . of the embodiment.

FIGURE 3 is a pair of matched traces for the period 28 May to 3 June 1984 showing in the upper trace barometic pressure, and in the lower trace,

 (i)   no. of secs/hr. heater on

 (ii)   thermocouple temp trace of reference chamber

 (iii) ambient atmospheric temperature

 (iv)  relative humidity

 (v)   rolling average index of $\dfrac{QHA}{QHT}$

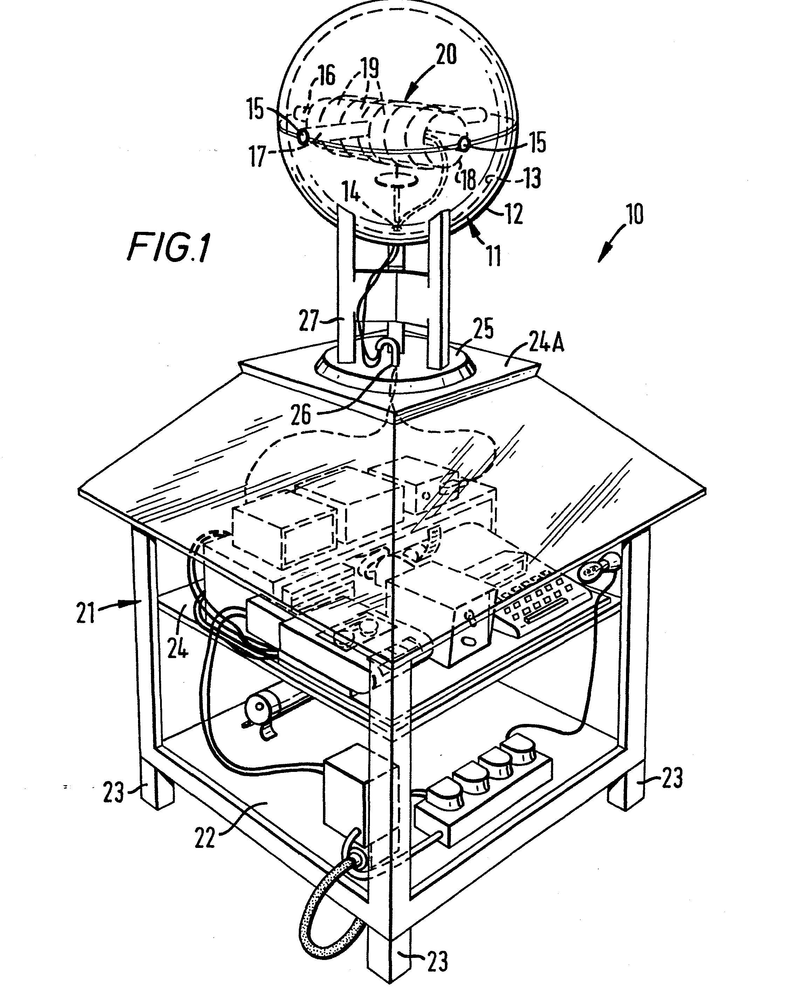

Referring now to Figure 1 of the drawings, there is shown a climatic comparator 10 comprising a substantially spherical chamber 11 of glass reinforced concrete having an outer surface 12, an inner surface 13 and an aperture 14. The cross sectional dimension between the outer and inner surfaces is uniform. The internal diameter of the chamber 11 is 345mm and the outer surface 12 roughened and is of a colour consistent with surface materials generally in use.

The chamber 11 is provided with a pair of tubes 16, 17 which extend diametrically of the chamber 11 orthogonal one to another, the tubes extending through the wall of the chamber 11 and being open ended, as shown at 15. The tube 16 extends radially through an aluminium cylinder 18 and the tube 17 extends axially through the cylinder 18. The tubes 16, 17 therefore locate the cylinder 18 in the chamber 11. The cylinder 18 has a plurality of turns of heating tape 19 having an electric filament extending longitudinally thereof, the tape being helically wound on an outer surface of the cylinder 18. The cylinder 18 and the heating tape 19 together comprise a heater, generally designated 20.

The comparator 10 also includes a cabinet 21 having a lower floor 22 raised from a supporting surface by legs 23 and an upper floor 24 spaced above the lower floor 22. The cabinet 21 is provided panels (not shown) which enclose space contained by the cabinet and one of the panels comprises a door for providing access to the space.

The cabinet 21 is provided with upper panels 23 which converge to an upper rectangular platform 24. The platform 24 is provided with a centrally located circular plinth 25 having an aperture 26 therein. The plinth 25 has upstanding thereon a tripod 27 on which the chamber 11 is mounted.

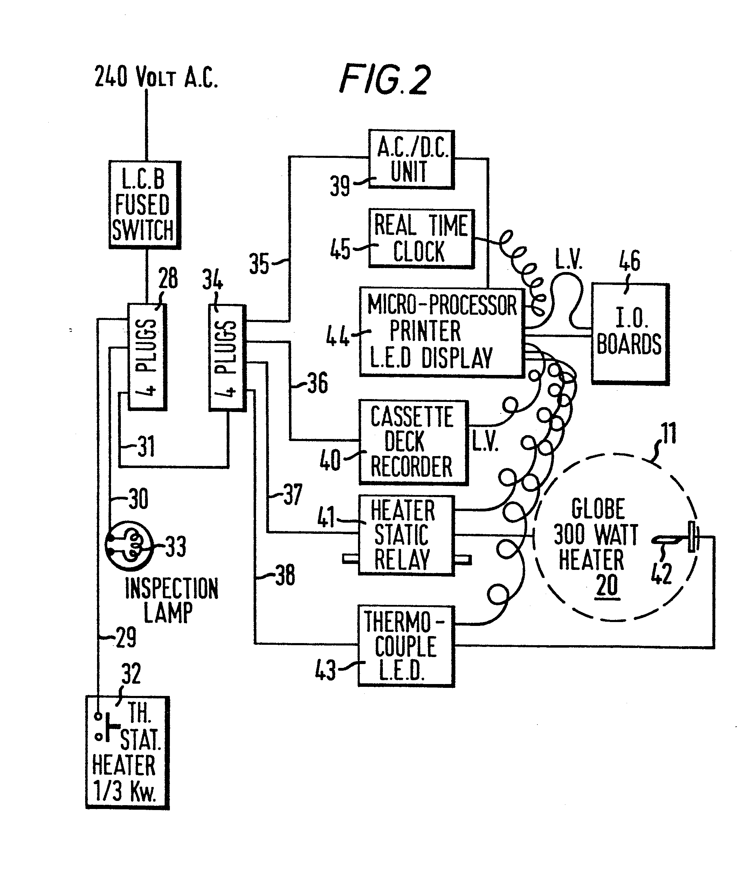

Referring now to Figure 2 of the drawings, electric power is supplied to the comparator 10 from an A.C. supply to a first junction box 28 having three output cables 29, 30 and 31. The output cable 29 is connected to supply a thermostatically controlled heater 32 for heating the interior of the cabinet 21; the output cable 30 is connected to supply a lamp 33 for illuminating the interior of the cabinet 21 and the output cable 31 is connected to supply a second junction box 34.

The second junction box 34 is provided with four output cables 35, 36, 37 and 38. The output cable 35 is connected to supply an A.C./D.C. unit 39; the output cable 36 is connected to supply a cassette deck recorder 40; the output cable 37 is connected to supply the heater 20 through a relay operated switch 41 the cable 37 extending through the aperture 26 in the plinth 25 and through the aperture 14 in the chamber 11; and the output cable 38 is connected to supply a thermo-couple L.E.D. 43 for recording temperature at a phile 42 and thereby indicating the temperature at which the chamber 18 maintained. An output of the A.C./D.C. unit 39 is connected to supply a microprocessor unit 44 having a printer and a display device. The microprocessor unit 44 also is connected to an electric clock 45 for supplying the unit 44 with signals indicative of units of time in successive twenty four hour cycles. Programmed information is supplied to the unit 44 from a data unit 46 and the unit 44 also is connected to the recorder 43 whereby frequency of activation of the thermostat 42 is controlled and recorded by the microprocessor unit 44. The microprocessor unit 44 is provided with an output to the relay operated switch 41 whereby the switch is operated to disconnect and re-connect power supply to the heater 20 in accordance with control signals received from the microprocessor unit 44.

In operation, the switch 41 is closed so that the heater 20 is connected to an electric power source to heat the air contained in the chamber 11. However, when the thermostat 42 senses that the temperature of air inside the chamber 11 is at 45 e, a signal is passed to the microprocessor unit 44 and the unit controls the switch 41 whereby supply of power to the heater 20 is discontinued. When the temperature of the air inside the chamber 11 falls due to dissipation of heat from the chamber 11, a signal is again passed to the microprocessor unit 44 and the unit controls the switch 41 so that power is re-supplied to the heater 20. The process continues at 6 second intervals when each recordal of temperature determines the operation of switch 41. The microprocessor unit 44, therefore, is arranged so as to provide a record of the proportion of each hour of a twenty four hour period during which the heater 20 is switched to an 'on' condition. The data thus collated by the microprocessor unit may be recorded either directly on the cassette deck recorder 40 or transmitted to data-processing apparatus.

In this manner, the rate of heat lost from the outer surface 12 of the chamber 11, due to climatic conditions outside the comparator 10 varies in inverse proportion to the climatic conditions and is compensated for by controlled operation of the heater 20 which supplies heat to the air contained within the chamber 11. The period during which the heater is switched on as a fraction of each hour of a twenty four hour period is recorded by the microprocessor unit 44 and is compared by the unit with the hourly statements of recorded dry bulb temperature ambient to the device.

These recorded hourly factors are then directly related to each other when a calculation of the amount of heat supplied relative to the difference between the sustained internal temperature of $45^{\circ}C$ and the ambient temperature is expressed as a coefficient of hourly performance of the device.

From this can be identified a comparison if a prescribed performance in relatiohsip to the actual performance, and calibration of the device is possible by the observation that when the coefficient of performance is valued at 1:0 numerically to satisfy the equation containing the power supplied as equal to the temperature difference multiplied by a number which is always constant throughout the range of climatic experiments to the comparator.

Identification of those days which have been climatically the same for purposes of further calculation may now be expressed in terms of an hourly statement if:-

(i)     the hourly power consumption is known

(ii)    the dry bulb temperature is known difference with the internal temperature of the device sustained at a stated level,

(iii)   the variable employed to equate the values of the power consumption and temperature difference.

Separate hourly statements of these numerical values may be used for whole periods of 24 hours or larger as relates to the thermal historesis if the individual buildings to the energy surveyed.

These separate statements of values can then be used to identify and index the day numbers recorded into pairs of days which exhibited the name values of energy transfer. As the data is retained it is then possible to relocate these days in sequences and obtained access to the thermal data, which being held in the form of an array can be plotted to a screen or x-y plotter for closer examination.

Contained within the identification code for each period can be other pointers as to the day of the week, yearly day number and the lengths of time traced over the period if any of the stated values. Through the choice of description code no., the efficient use of the retroval system can be maintained.

Contained with the thermal data can be other relative related information such as the hours of input, summarise, building occupancy and production use. These items must include the metered readings of energy consumption as observed or similarly automatically recorded.

It is certain that the performance of the device will be affected if relocation or the profile of its daily exposure is altered. Further it can be used to operate in the way described when mounted in direct sunlight out of doors or shaded within a radiation proof screen, and may also be employed to relate to climates within buildings when suitably located indoors.

Having identified those days which relate to each other it is then assumed that if the metered readings for these same days are examined they should also hold in their values, identity with the climate. The trend can thus be determined both in magnitude and rate of change for the registered energy meter readings by comparison with a range of these samedays. If these trends are valued in respect to zero the actual energy in use performance for the building becomes known.

It cannot be assumed that the values are strictly proportional as indexed in relationship to temperature level of the power consumed which similarly cannot be assumed in the case of a building until observed.

This method illustrates that days with the lowest average dry bulb temperature are not usually those requiring the greatest amount of energy for heating purposes. Examination of temperature level and power consumption relationships are continuously reported using this method of indexing.

When the comparator is directly connected to effect control of heating and cooling appliances, the value calculated to be that which equates power assumption by the heater with the temperature difference is employed to modify further that proportional signal obtained from the outdoor dry bulb temperature, before transmission as an instruction for the regulation of energy flow rate at the appliances. This gives a form of continuously control in which the prescription for the control system is not dependent on temperature measurement alone.

The amount of heat energy and the rate it is necessary to make this available to effect a level of comfort in a room is only marginally dependent on temperature level. Thus the continual over-prescription for energy can be moderated and over-provision avoided. This also assists in reducing the overshoot of heating resulting in an expenditure on cooling and the possibility of this becoming repatitively cyclic.

It will be appreciated that, over a period of 12 months, the data recorded on a daily basis provides a 'climatic profile' of the building on which the comparator 10 is located. Such information is more accurate than that provided by methods of reducing or conserving energy consumption know hitherto and, in consequence, the effectiveness of procedures adopted to conserve energy consumption in a building can be analysed more accurately than hitherto.

It will also be appreciated that a number of comparators 10 may be located on different buildings in different localities and the data recorded by the comparators compared one with another so that the benefits of procedures for reducing energy consumption in a building can be considered for similar buildings in the same location where procedures for conserving energy have been applied.

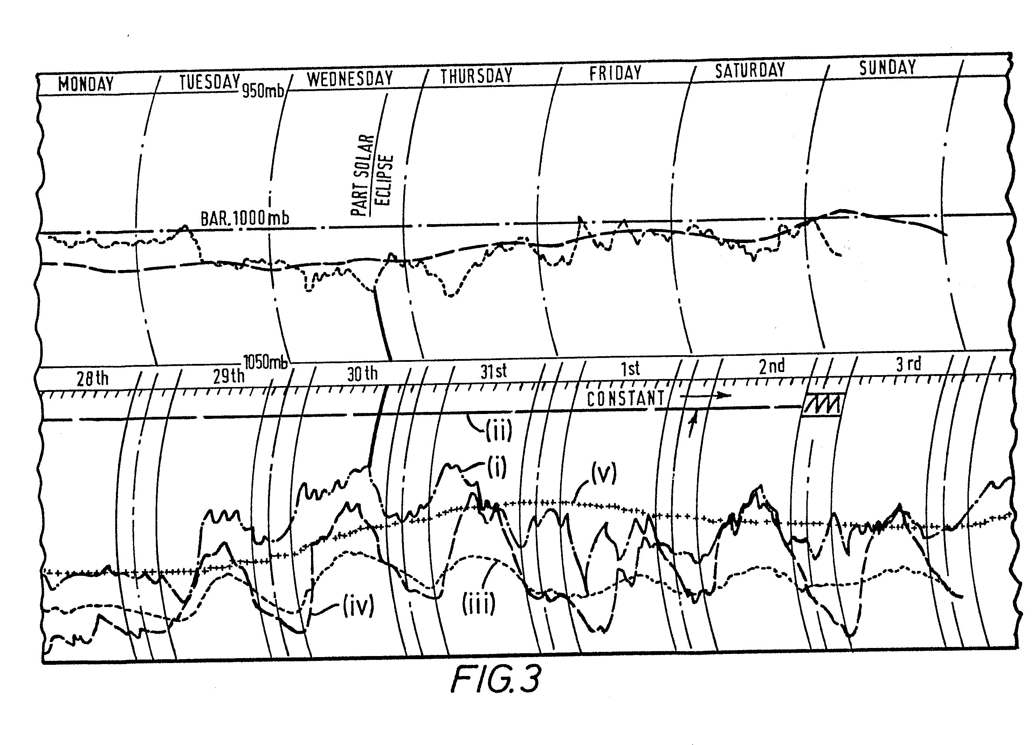

The results of a typical series of traces is shown in Figure 3.

CLAIMS

1.     A method of comparing climatic conditions at a location which method comprises providing a reference chamber at said location, said chamber containing a gas and being equipped with heating means,

controlling the operation of said heating means to maintain said gas at a predetermined temperature in compensation for heat lost from said chamber to the atmospher,

and recording the duration and/or rate of the supply of heat energy by said heating means during a predetermined interval, characterised in that the structure of said chamber is readily permeable by vapour, has a substantially uniform wall thickness and comprises a material capable of emitting negative ions.

2.     A method as claimed in claim 1 wherein the reference chamber is a sphere.

3.        A method as claimed in claim 1 or claim 2 wherein the reference chamber is formed from glass reinforced concrete.

4.        A method as claimed in any preceding claim wherein the said information is entered in data processing apparatus and the steep of comparing said information for said period is effected by operating said apparatus.

5.        A method as claimed in claim 4 wherein recordal of duration of the heater is effected on a recording medium and comparison of said informtion is effected by entering said medium in data processing apparatus and by operating said apparatus so as to compare information recorded on said medium with information recorded on a store of said apparatus.

6.        A method as claimed in claim 1 and substantially as hereinbefore described.

7.        A climatic comparator comprising
          a reference chamber containing a gas,
          heating means adapted to supply heat to said
gas,

- 24 -

control means for said heating means to operate the heating means to maintain said gas at a predetermined temperature in compensation for heat lost from said chamber to said atmosphere,

and recording means for recording the duration and/or rate of supply of heat energy by said heating means,

wherein the wall of said chamber is readily permeable by vapour, has a substantially uniform wall thickness and comprises a material capable of emitting negative ions.

8.    A comparator as claimed in claim 7 wherein the heater is electrically operated and the control means is connected in an electric circuit which also includes the heater and comprises a thermostat for maintaining the gas at said temperature.

9.    A comparator as claimed in claim 7 or claim 8 wherein the recording means comprises means for storing said signals.

10.    A comparator as claimed in any one of claims 7 to 9 wherein the chamber is of spherical configuration.

11. A comparator as claimed in any one of claims 7 to 10 wherein the chamber is of glass fibre re-inforced concrete.

12. A comparator as claimed in any one of claims 7 to 11 wherein the control means is adapted to control operation of the heater so that electric power is supplied to the heater when the temperature of the air is outside the range 2°C to 45 °C.

13. A climatic comparator substantially as hereinbefore described with reference to and as illustrated in the accompanying drawings.

14. Each and every novel embodiment herein set forth taken either separately or in combination.

FIG.1

FIG.2

FIG.3

0142305